# EUROPEAN PATENT SPECIFICATION

(11) **EP 1 075 067 B1**
(45) Date of publication and mention of the grant of the patent: **30.11.2005**
(21) Application number: 99203805.9
(22) Date of filing: 15.11.1999
(51) Int. Cl.: H02G 3/06

(54) **Tube connector**
Rohrverbinder
Connecteur pour tube

(30) Priority: 03.08.1999 IT MI990495 U
(43) Date of publication of application: 07.02.2001
(73) Proprietor: B.F.E. S.p.A., 39100 Bolzano (IT)
(72) Inventor: Gresele Amenduni, Michele, 36057 Arcugnano (Vicenza) (IT)
(74) Representative: Long, Giorgio

(56) References cited:
- FR-A- 1 088 497
- US-A- 2 489 100
- US-A- 3 761 115

## Description

The present innovation relates to a tube connector and, in particular, to a connector for forming an adjustable angle for tubes carrying electrical wiring and/or optical fibres.

With connectors for tubes intended to contain electrical wiring and/or optical fibres, a need is felt for connectors that are structurally simple and versatile. In particular, in order to be able to make connectors or junctions between tubes running in different directions it is desirable to be able to make these with a limited number of standard parts, so as to avoid the need to have a plurality of different parts.

At the present time the problem of connectors between tubes is solved by using a great variety of different connecting components, such as sleeves, bends and so forth, which make it possible to follow the necessary changes of angle in the path along which the tubes carrying electrical wiring and/or optical fibres are to be positioned.

As an alternative, the tubes are bent or are manufactured directly with the curvatures dictated by the path in question.

The above solutions present many problems which render them more or less unsatisfactory.

First of all, besides being expensive, it is also inconvenient to have to assemble several parts together in order to make one tube connector. Moreover, more often than not the operations of assembling and disassembling the various components of the connector are complicated and cause time to be lost.

On the other hand, when using tubes which are bent as described above, it should be pointed out that the operation of shaping and bending the tubes requires the use of dedicated equipment, in addition to specialized workers.

A tube connector according to the preamble of Claim 1 is known from prior art document US-A-2489100.

The problem addressed by the present innovation is that of devising a tube connector having structural and functional characteristics such as to satisfy the abovementioned demands and at the same time to overcome the problems presented by the tube connectors of the prior art.

This problem is solved with a tube connector in accordance with Claim 1.

The features and the advantages of the tube connector according to the present innovation will become apparent in the course of the description given below of a preferred embodiment, which is provided by way of non-restrictive indication and refers to the accompanying figures, in which:
- Figure 1 is a side view in partial section of the tube connector according to the innovation;
- Figures 2a and 2b show side views of the tube connector seen in Figure 1 in two different configurations of use; and
- Figures 3a and 3b show side views in partial section of the two hollow bodies of the tube connector seen in Figure 1.

With reference to the accompanying figures, 1 is a general indication for a tube connector according to the present innovation.

The said connector 1 consists of two separate hollow bodies 2a and 2b, each of which has an aperture denoted 3a and 3b, respectively.

In the example, the apertures 3a and 3b of the hollow bodies 2a and 2b take the form of two flanged sleeves of predetermined axis X-X each designed to be connected to its own tube, which in itself is conventional and is not shown in the figures. In the example shown in the figures, the two hollow bodies 2a and 2b take the form of two mirror-image shells each in the shape of a half sphere or portion of a sphere capable of fitting together to give rise to a single spherical hollow body.

The hollow bodies 2a and 2b have respective ends 4a and 4b designed to be connected together reversibly, or detachably, by closure means which provide a sealed connection between these hollow bodies 2a and 2b.

The ends 4a and 4b lie on an inclined plane whose perpendicular Y-Y is inclined at a predetermined angle α to the axes X-X of the apertures 3a and 3b, as indicated in the figures. The angle α is preferably 45°.

The closure means for sealing the ends 4a and 4b are preferably a quick-release coupling.

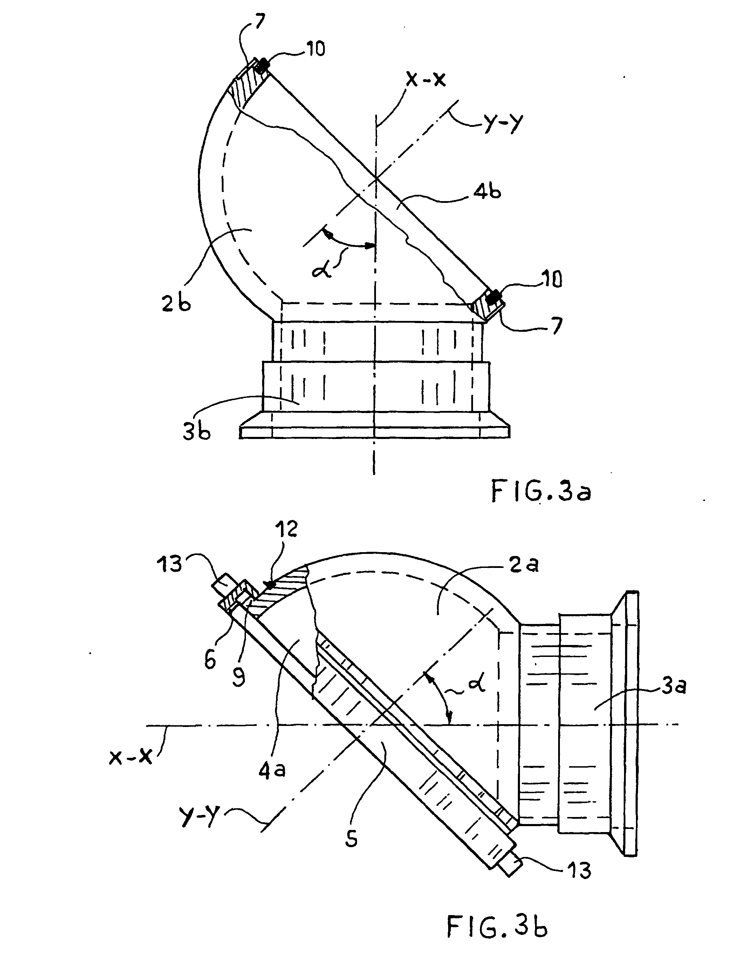

In the example, the closure means take the form of a threaded ring 5 attached to and rotatable on the end 4a of the hollow body 2a and having portions of thread 6 of a female multistart thread, as shown in Figure 3b. These portions of thread 6 are designed to engage with corresponding threaded portions 7 formed on the end 4b, as shown in Figure 3a, in such a way as to form a threaded connection.

On the other hand, the quick-release sealing means may be of the bayonet type.

The end 4a of the hollow body 2a is provided with a stop flange 9 against which the rotatable ring 5 can abut. In this way when the two sphere portions 2a and 2b are placed with their respective ends 4a and 4b against each other in abutment, the rotatable ring 5 on end 4a can be rotated through a fraction of a revolution in order to produce a screw-type engagement between its portions of thread 6 and the corresponding threaded portions 7 on end 4b.

In a preferred embodiment, the forward face of the end 4b of the body 2b contains an annular seat running all the way round its edge to receive a seal 10. When the seal 10 is housed in the annular sealing seat, the seal 10 slightly projects from the end 4b of the hollow body 2b as shown in Figure 3a.

The seal 10 ensures a completely leaktight joint between the two sphere portions 2a and 2b when the latter are clamped together by the closure means.

It is clear therefore that the connector according to the present innovation is advantageously secure against the ingress of liquids or dirt.

The presence of the seal 10 provides the advantage that the connection according to the innovation can be used for connecting tubes or pipes designed to carry liquids or fluids under pressure. In this case the connector according to the innovation also performs the function of a section break to prevent the occurrence of water hammer due to phenomena of localized pressure increases.

The end 4a of sphere portion 2a may advantageously have limiting means 11 to prevent the ring 5 from coming off the end 4a of the hollow body 2a. In the example, the limiting means 11 take the form of an elastic annulus 12 inserted in an annular seat formed in the outer surface of the hollow body 2a at a predetermined limited distance from the end 4a. The annulus 12 projects from the annular seat so as to form a stop for the ring 5. Basically, the ring 5 is free to move between the flange 9 on the end 4a, and the annulus 12. The portion of the annulus 12 that projects from the annular seat exhibits a back towards the flange 9, past which the ring 5 cannot move, and a face towards the end 3a which forms a guide ramp enabling the ring 5 to be pushed over it into position.

It is evident, therefore, that the annulus 12 permits easy insertion of the ring 5 into position ready for use because of the guide ramp formed by the inclined surface of the face and, at the same time, prevents the ring 5 from coming off the hollow body 2a.

As an alternative to the above, the annulus 12 may be replaced by two or more teeth projecting from corresponding seats formed in the outer surface of the hollow body 2a.

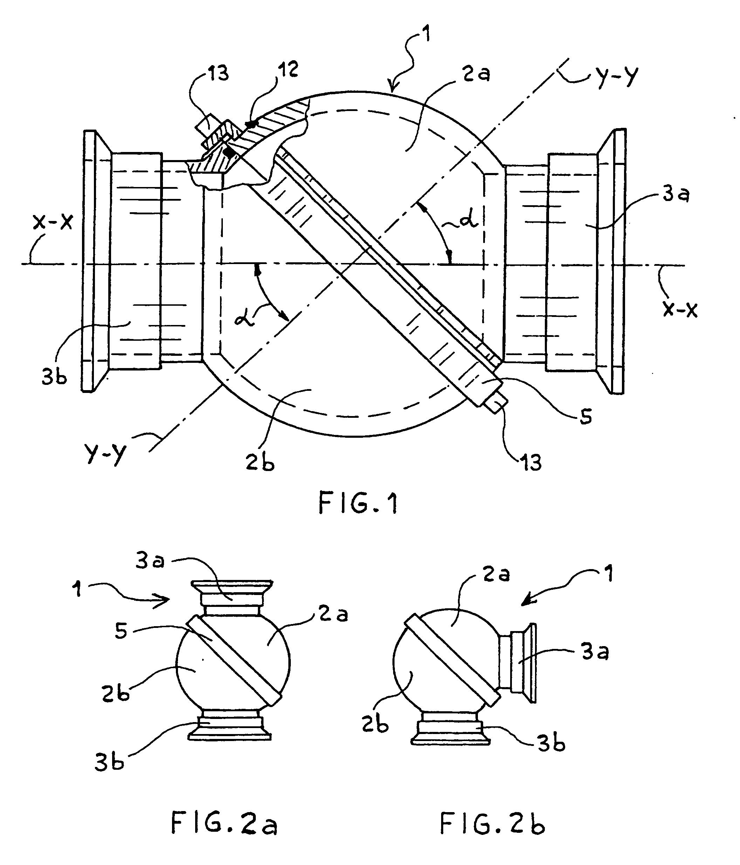

Advantageously, with the connector according to the innovation it is possible to connect up not only in-line tubes but also tubes lying in different directions. Thus, referring to Figures 2a and 2b, shown here are two different configurations of use in which the apertures 3a and 3b are arranged in line or at right angles to each other.

In Figure 2a, the two mirror-image sphere portions 2a and 2b are connected together in such a way that the two ends 3a and 3b have their respective axes X-X in line with each other.

Alternatively, as shown in Figure 2b, the two sphere portions 2a and 2b have been rotated relative to each other so that the axes passing through their respective ends 3a and 3b form a right angle.

Furthermore, it is possible to twist the connector according to the innovation so that the apertures are oriented in any intermediate position between those shown in Figures 2a and 2b.

It will be clear from the above description that the tube connector according to the present innovation allows a junction to be made between two in-line tubes or between tubes whose axes are convergent. This is made possible by the fact that the ends 4a and 4b lie on an inclined equatorial plane whose normal Y-Y is inclined to the axes X-X of the apertures 3a and 3b. Hence a relative rotation of the hollow bodies is possible about the axis Y-Y until the axes X-X of the apertures 3a or 3b are at the desired angle. It is almost superfluous to point out that the relative rotation of the ends 4a and 4b relative to the axis Y-Y must be done before the closure means are tightened together.

The shapes and/or dimensions of the parts which go to make up the tube connector according to the present innovation may vary according to requirements. For example, the rounding of the hollow bodies 2a and 2b may be greater or lesser.

Similarly the shape and size of the ring 5 may assume different configurations provided they are such as to fit the outline of the opening of the two hollow bodies 2a and 2b. Moreover, the ring 5 may advantageously be given grips or reliefs 13, as illustrated in Figure 1 or 3b in order to facilitate the operations of screwing or unscrewing it.

Depending on the particular conditions of use, the connector according to the innovation can be made with different materials such as, for example, plastic materials, metallic materials, ceramic materials and yet others.

As can be appreciated from the above description, the tube connector according to the innovation fulfils the requirements referred to in the introductory part of the present description and at the same time overcomes the drawbacks presented by the tube connectors of the prior art, and has indeed been found to be extremely simple, practical and versatile in use.

Obviously, a person skilled in the art may make modifications and alterations to the embodiment of the tube connector described above in order to satisfy particular and local requirements, while remaining within the scope of protection defined by the following claims.

## Claims

1. Tube connector comprising two hollow bodies (2a, 2b) having at least one aperture (3a, 3b) for connection to a corresponding tube and ends (4a, 4b) connected to each other by reversible closure means (5, 6, 7) in such a way as to form a sealed connection between the said hollow bodies (2a, 2b), said ends (4a, 4b) lieing on a plane whose perpendicular (Y-Y) is inclined to the axes (X-X) of the apertures, the angular position about the perpendicular (Y-Y) of one of the said ends (4a) with respect to the other of the said ends (4b) being adjustable to allow the angle between the said apertures of the connector to be varied, which connector is **characterized in that** the closure means are a quick-release coupling comprising a threaded ring (5) attached to and rotatable on the end (4a) of a first hollow body (2a), which has portions of thread (6) of a multistart thread designed to engage with corresponding threaded portions (7) on the end (4b) of the other hollow body (2b).

2. Tube connector according to Claim 1, in which the end (4a) of the said first hollow body (2a) comprises a stop flange (9) against which the rotatable ring (5) abuts.

3. Tube connector according to Claim 2, in which the end (4a) of the said first hollow body (2a) comprises limiting means (12) to prevent the ring (5) from coming off the first hollow body (2a) when the ring (5) is not engaged with the said threaded portions (7) on the end (4b) of the other hollow body (2b).

4. Tube connector according to Claim 3, in which the said limiting means comprise an elastic annulus (12) inserted in an annular seat formed in the outer surface of the first hollow body (2a) at a predetermined limited distance from the end (4a), the said annulus (12) projecting from the annular seat so as to form a stop for the ring (5).

5. Tube connector according to claim 1, in which the ring (5) includes grips or reliefs (13) in order to facilitate the operations of screwing or unscrewing it.

6. Tube connector according to Claim 1, in which a seal (10) is positioned between the ends (4a, 4b) of the said hollow bodies (2a, 2b).

7. Tube connector according to Claim 6, in which the said seal is housed in a sealing seat formed at one of the said ends.

8. Tube connector according to Claim 1, in which the perpendicular (Y-Y) is inclined to the axes (X-X) of the apertures (3a, 3b) by an angle of 45°.

## Patentansprüche

1. Rohrverbinder mit zwei Hohlkörpern (2a, 2b) mit mindestens einer Öffnung (3a, 3b) zum Verbinden mit einem entsprechenden Rohr und Enden (4a, 4b), die durch eine umkehrbare Verschlussvorrichtung (5, 6, 7) in der Weise miteinander verbunden sind, um eine abgedichtete Verbindung zwischen den Hohlkörpern (2a, 2b) zu bilden, wobei die Enden (4a, 4b) auf einer Ebene liegen, dessen Senkrechte (Y-Y) zu den Achsen (X-X) der Öffnungen geneigt ist, wobei die Winkelposition um die Senkrechte (Y-Y) von einem der Enden (4a) bezüglich dem anderen der Enden (4b) einstellbar ist, um dem Winkel zu ermöglichen, zwischen den Öffnungen des Verbinders verändert zu werden, wobei der Verbinder **dadurch gekennzeichnet ist, dass** die Verschlussvorrichtung eine Schnellkupplung ist, die einen Gewindering (5) aufweist, der auf dem Ende (4a) eines ersten Hohlkörpers (2a) angeordnet und drehbeweglich ist, der Gewindebereiche (6) eines mehrgängigen Gewindes aufweist, das ausgelegt ist, um mit entsprechenden Gewindebereichen (7) auf einem Ende (4b) des anderen Hohlkörpers (2b) in Eingriff zu sein.

2. Rohrverbinder gemäß Anspruch 1, bei dem das Ende (4a) des ersten Hohlkörpers (2a) einen Anschlagflansch (9), an dem der drehbare Ring (5) anliegt, aufweist.

3. Rohrverbinder gemäß Anspruch 2, bei dem das Ende (4a) des ersten Hohlkörpers (2a) die Begrenzungsvorrichtung (12) aufweist, um den Ring (5) davon abzuhalten, sich vom ersten Hohlkörper (2a) zu lösen, wenn der Ring (5) nicht mit den Gewindebereichen (7) auf dem Ende (4b) des anderen Hohlkörpers (2b) in Eingriff ist.

4. Rohrverbinder gemäß Anspruch 3, bei dem die Begrenzungsvorrichtung einen elastischen Ring (12) aufweist, der in einem ringförmigen Sitz angeordnet ist, der- in der Außenfläche des ersten Hohlkörpers (2a) an einem vorbestimmten begrenzten Abstand vom Ende (4a) ausgebildet ist, wobei der Ring (12) vom ringförmigen Sitz hervorspringt, um so einen Anschlag für den Ring (5) zu bilden.

5. Rohrverbinder gemäß Anspruch 1, bei dem der Ring (5) Griffe oder Konturen (13) aufweist, um die Abläufe des Verschraubens oder Lösens zu erleichtern.

6. Rohrverbinder gemäß Anspruch 1, bei dem eine Dichtung (10) zwischen den Enden (4a, 4b) der Hohlkörper (2a, 2b) positioniert ist.

7. Rohrverbinder gemäß Anspruch 6, bei dem die Dichtung in einem Dichtungssitz, der an einem der Enden ausgebildet ist, aufgenommen ist.

8. Rohrverbinder gemäß Anspruch 1, bei dem die Senkrechte (Y-Y) zu den Achsen (X-X) der Öffnungen (3a, 3b) um einen Winkel von 45° geneigt ist.

## Revendications

1. Raccord pour tubes comprenant deux corps creux (2a, 2b) comportant au moins une ouverture (3a, 3b) prévue pour raccordement avec un tube correspondant et des extrémités (4a, 4b) reliées l'une à l'autre par des moyens de fermeture réversibles (5, 6, 7) de façon à former un raccordement étanche entre lesdits corps creux (2a, 2b), lesdites extrémités (4a, 4b) se trouvant sur un plan dont la perpendiculaire (Y-Y) est inclinée par rapport aux axes (X-X) des ouvertures, la position angulaire autour de la perpendiculaire (Y-Y) de l'une desdites extrémités (4a) par rapport à l'autre desdites extrémités (4b) pouvant être réglée pour permettre de varier l'angle entre lesdites ouvertures du raccord, lequel raccord est **caractérisé en ce que** les moyens de fermeture sont des raccords rapides comprenant une bague taraudée (5) assujettie à et mobile en rotation sur l'extrémité (4a) d'un premier corps creux (2a), laquelle comporte des parties de filets (6) d'un filetage multiple conçues pour engager avec des parties filetées correspondantes (7) situées sur l'extrémité (4b) de l'autre corps creux (2b).

2. Raccord pour tubes selon la revendication 1, dans lequel l'extrémité (4a) dudit premier corps creux (2a) comprend un rebord (9) de butée contre lequel la bague mobile en rotation (5) vient en butée.

3. Raccord pour tubes selon la revendication 2, dans lequel l'extrémité (4a) dudit premier corps creux (2a) comprend des moyens (12) de limitation servant à empêcher que la bague (5) ne sorte du premier corps creux (2a) lorsque la bague (5) n'est pas en engagement avec lesdites parties filetées (7) de l'extrémité (4b) de l'autre corps creux (2b).

4. Raccord pour tubes selon la revendication 3, dans lequel lesdits moyens de limitation comprennent un anneau élastique (12) introduit dans un logement annulaire formé dans la surface extérieure du premier corps creux (2a) à une distance limitée prédétermimée de l'extrémité (4a), ledit anneau (12) faisant saillie du logement annulaire de façon à former une butée destinée à la bague (5).

5. Raccord pour tubes selon la revendication 1, dans lequel la bague (5) comprend des parties de saisie ou en relief (13) servant à en faciliter les opérations de vissage ou de dévissage.

6. Raccord pour tubes selon la revendication 1, dans lequel un joint d'étanchéité (10) est positionné entre les extrémités (4a, 4b) desdits corps creux (2a, 2b).

7. Raccord pour tubes selon la revendication 6, dans lequel ledit joint d'étanchéité est logé dans un logement d'étanchéité formé au niveau de l'une desdites extrémités.

8. Raccord pour tubes selon la revendication 1, dans lequel la perpendiculaire (Y-Y) est inclinée, d'un angle de 45°, par rapport aux axes (X-X) des ouvertures (3a, 3b).
